(19) **Europäisches Patentamt**
**European Patent Office**
**Office européen des brevets**

(11) **EP 4 350 928 A1**

(12) **EUROPEAN PATENT APPLICATION**

(43) Date of publication:
**10.04.2024 Bulletin 2024/15**

(21) Application number: **22200358.4**

(22) Date of filing: **07.10.2022**

(51) International Patent Classification (IPC):
***H02J 3/38*** (2006.01)   ***H02M 7/5387*** (2007.01)

(52) Cooperative Patent Classification (CPC):
**H02J 3/38; H02M 7/53876; H02M 7/4835**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Hitachi Energy Ltd**
**8050 Zürich (CH)**

(72) Inventors:
- **Larsson, Mats**
  **5102 Rupperswil (CH)**
- **Christe, Alexandre**
  **3007 Bern (CH)**
- **Shchetinin, Dmitry**
  **5600 Lenzburg (CH)**

(74) Representative: **AWA Sweden AB**
**Box 45086**
**104 30 Stockholm (SE)**

(54)   **A CONTROL SYSTEM CONFIGURED FOR, AND A METHOD FOR, CONTROLLING A CONVERTER**

(57)   A control system for controlling a converter is provided. The system is configured to decompose a PCC voltage vector, EMF vector, and a vector representative of a impedance into, corresponding, positive and negative sequence vectors, calculate positive and negative sequence vectors of a reference current, transform the positive and negative sequence vectors of the reference current into a three-phase reference frame to obtain a vector of reference currents for three phases. The system comprises an EMF-limiter configured to, if one or more phase currents of the phase currents vector is determined to exceed a predetermined current limit, limit at least one of the positive and negative sequence vectors such that the resulting one or more phase currents is reduced below said predetermined current limit. The system is configured to calculate a reference voltage based at least on the EMF vector output from the EMF-limiter.

Fig. 1

**Description**

**TECHNICAL FIELD**

The present disclosure relates to electric power systems, especially control of electric power systems.

**BACKGROUND**

Synchronous generators provide power systems with important ancillary services, such as synchronizing and damping torque, high short-circuit currents and inertia. The ancillary services are important for being able to handle large disturbances in a power system, such as, for example, a short-circuit fault, and play a big part in why conventional synchronous generators are able to provide, so called, grid-forming capabilities.

Power systems and power generation are going through a shift due to the increasing penetration of renewable energy sources, such as photovoltaic panels and wind turbines. In parallel with the increase of renewable energy sources, the integration of power-electronic systems, such as Flexible Alternating Current Transmission Systems (FACTS) and High-Voltage, Direct Current (HVDC) systems, has increased to deal with such renewable energy sources. Thereby, in order to properly meet the increase of renewable energy sources, there is a need for power-electronic systems being able to provide grid-forming capabilities, rather than so called grid-following capabilities.

Therefore, there is a great interest in using converters, for example, of FACTS-and/or HVDC-systems, in a power system to more reliably provide grid-forming capabilities.

**SUMMARY**

It is therefore an object of the present invention to provide a control system, and a method thereof, which allows for using converters to provide grid-forming capabilities.

According to a first aspect of the present disclosure, a control system is provided. The control system is provided for controlling a converter connected at a point-of-common-coupling (PCC) to emulate a voltage source connected to the PCC via an impedance. The system is configured to receive a PCC voltage vector which is measured at the PCC, and an electromagnetic force (EMF) vector of the voltage source. The system is further configured to decompose the PCC voltage vector, the EMF vector, and a vector representative of the impedance into, corresponding, positive and negative sequence vectors, and to calculate positive and negative sequence vectors of a reference current based on at least the positive and negative sequence vectors of the PCC voltage vector, the EMF vector, and the impedance. The system is further configured to transform the positive and negative sequence vectors of the reference current into a three-phase reference frame to obtain a vector of reference currents for three phases. The system comprises an EMF-limiter configured to, if one or more phase currents of the phase currents vector is determined to exceed a predetermined current limit, limit at least one of the positive and negative sequence vectors of the EMF vector such that the resulting one or more phase currents of the phase currents vector is reduced below said predetermined current limit. The system is configured to calculate a reference voltage vector based at least on the EMF vector output from the EMF-limiter.

According to a second aspect of the present disclosure, a method is provided. The method is provided for controlling a converter connected at a PCC, to emulate a voltage source connected to the PCC via am impedance. The method comprises the steps of receiving a PCC voltage vector which is measured at the PCC, and an EMF vector of the voltage source, decomposing the PCC voltage vector, the EMF vector, and a vector representative of the impedance into, corresponding, positive and negative sequence vectors. The method comprises the steps of calculating positive and negative sequence vectors of a reference current based on at least the positive and negative sequence vectors of the PCC voltage vector, the EMF vector, and the impedance, and transforming the positive and negative sequence vectors of the reference current into a three-phase reference frame to obtain a vector of reference currents for three phases. The method further comprises the steps of determining if one or more phase currents of the phase currents vector exceed a predetermined current limit, and of so, limit at least one of the positive and negative sequence vectors of the EMF vector such that the resulting one or more phase currents of the phase currents vector is reduced below said predetermined current limit. The method further comprises calculating a reference voltage vector based at least on the EMF vector output from the EMF-limiter.

The present disclosure is based on the concept of using positive and negative sequence vectors of the EMF vector in order to determine references for the converter such that physical limits of the converter are not exceeded. Further, the present disclosure provides for positive and negative sequence limitation, in order to preserve the grid forming capabilities of a converter. Thereby, an improved control of a converter connected to a power network at a PCC is provided. Further, the present disclosure may provide for an increased longevity of the converter and/or an increased level of security for people operating and/or maintaining the converter, or being near the converter, by ensuring that the physical limits of the converter are adhered to.

Physical limits may include a maximum converter current and/or voltage of the converter. The converter may form part of a greater power system, which may consequently put additional limitations on the converter, such as, but not limited to, a maximum direct current (DC) a maximum DC voltage, and/or converter valve power limits. Such module limitations may be calculated, measure and/or determined by a module outside of the control system. The module may be communicatively coupled to the control system in order to be able to communicate the limitations. The module limitations may be aggregated to determine power limits, which may include maximum and/or minimum limits for active and/or reactive power. Further, the present disclosure may be configured to receive and/or calculate active and/or reactive power, which may be derived from a steady state model of the converter.

The EMF vector of the voltage source may be calculated based on active and reactive power references and active and reactive power measured at the PCC.

The control system and the method according to present disclosure may further comprise continuous evaluation of active and/or reactive power limits, and may be configured to limit, or bound, a magnitude and/or phase angle of the EMF vector based on said active and/or reactive power limits. Further, the active power range and the reactive power range may each be defined by a minimum limit and/or a maximum limit, respectively.

The control system according to present disclosure may further comprise a power limiter configured for limiting the positive sequence EMF magnitude and/or the positive sequence EMF angle of the positive sequence EMF vector if the resulting active power falls outside of an active power range The power limiter may further be configured for limiting the negative sequence EMF magnitude and the negative sequence EMF angle of the negative sequence EMF vector if the resulting reactive power falls outside of a reactive power range. Consequently, the method according to the present disclosure may involve the corresponding step(s).

The control system according to the present disclosure may further comprise a reactive power controller (RPC) configured to calculate the EMF magnitude of the EMF vector based on at least a reactive power reference and a reactive power measured at the PCC, and an active power controller (APC) configured to calculate the EMF angle of the EMF vector based on the active power reference and the active power measured at the PCC. The method according to the present disclosure may comprise the steps of calculating the EMF magnitude of the EMF vector based on at least a reactive power reference and a reactive power measured at the PCC and or calculating the EMF angle of the EMF vector based on the active power reference and the active power measured at the PCC.

Further, the present disclosure may use conventional anti wind-up schemes, which may utilize a difference between unlimited and limited magnitude and/or phase angle of the EMF vector, so as to correct errors.

The converter may be a modular multilevel converter (MMC). The converter may be connected to a power grid, such a national or regional power grid, at a PCC. The impedance may be a virtual impedance or a physical impedance.

Decomposition of vectors into positive and/or negative sequence vectors may be made by conventional decomposition methods.

The predetermined current limit may be calculated based on physical parameters of the converters and/or a power system to which the converter is connected. The physical parameters may include, but are not limited to, a measured thermal stress of semiconductors of the converter, thermal stress of a transformer of the converter, and/or a predetermined converter capability.

Further, the present disclosure may include the use of a current reference limiter. The current reference limiter may be based on current refences measured after the virtual admittance, i.e., at the PCC. The current reference limiter may be configured to ensure that current references are below a maximum current limit. Thereby, the current reference limiter may protect the converter and/or the power system to which the converter is connected. However, the use of the current reference limiter may come at the cost of, temporarily, losing grid forming capabilities.

The limiting of at least one of the EMF positive and negative sequence vectors, which may, alternatively, be referenced to in the following as "the EMF limiting", may be based on steady state peak values for output phases of the converter. The EMF limiting may then be configured to limit, bound, or bring down, peak output currents of the converter within limits. If possible, only the EMF magnitude may be limited. However, sometimes only limiting the EMF magnitude is not sufficient, and both the EMF magnitude and the EMF angle may have to be limited, or modified.

The positive and negative sequence vectors of the reference current may be calculated according to the following equations:

$$\underline{i}^{+}_{\text{Ref,Unlim}} = \frac{\underline{e}_{+} - \underline{u}_{+}}{\underline{Z}_{+}}$$

$$\underline{i}^{-}_{\text{Ref,Unlim}} = \frac{\underline{e}_{-} - \underline{u}_{-}}{\underline{Z}_{-}}$$

The reference current may also be understood as a predicted steady-state current, and the terms may be used interchangeably. In other words, the unlimited positive and negative sequence vectors of the steady-state current (or reference current) may be based on the corresponding positive and negative sequence vectors of the EMF vector minus the PCC voltage vector divided by the impedance vector. In other words, the predicted steady-state current vector may be determined based on a difference between the EMF vector and the PCC voltage vector.

The limiting of at least one of the EMF positive and negative sequence vectors may be according to either of the following set of equations:

$$\underline{e}_{\text{Lim}}^{+} = e_{\text{Lim}}^{+} \exp(j\delta_p), \qquad \underline{e}_{\text{Lim}}^{-} = e_{\text{Lim}}^{-} \exp(j\delta_n)$$

or

$$\underline{e}_{\text{Lim}}^{+} = \underline{u}_{+} + k\underline{Z}_{+}\underline{i}_{\text{Ref,Unlim}}^{+}, \qquad \underline{e}_{\text{Lim}}^{-} = \underline{u}_{-} + k\underline{Z}_{-}\underline{i}_{\text{Ref,Unlim}}^{-}$$

wherein $e_{\text{Lim}}^{+}$ may be the limited positive sequence EMF magnitude of the EMF vector, $\delta_p$ may be the positive sequence EMF angle of the EMF vector, $e_{\text{Lim}}^{-}$ may be the limited negative sequence EMF magnitude of the EMF vector, $\delta_n$ may be the negative sequence EMF angle of the EMF vector, and k may be a reduction factor equal to the predetermined current limit divided by a maximum phase current. $\underline{i}_{\text{Ref,Unlim}}^{+}$ and $\underline{i}_{\text{Ref,Unlim}}^{-}$ may be the calculated positive and negative sequence vectors of the reference current Alternatively, or additionally, the vector of reference currents for three phases $\underline{i}_{\text{ABC,Unlim}}$ may be used to determine the limits for at least one of the EMF positive and negative sequence vectors.

The calculation of a maximum current limit may be made by parametrizing an affine curve where a maximum current lies and equating it to the maximum current limit. The affine curve could be parametrized as $AA \cdot e + BB = i$, where

$$AA = \frac{PN2ABC(ph,1)\exp(i\delta_p)}{z_+}, \text{ and } BB = PN2ABC(ph,:)\begin{bmatrix} -\frac{u_+}{z_+} \\ -\frac{u_-}{z_-} \end{bmatrix}, PN2ABC = \begin{bmatrix} 1 & 1 \\ a^2 & a \\ a & a^2 \end{bmatrix}$$

with $a = \exp\left(\frac{i2\pi}{3}\right)$.

To find the solution to the above parametrization of the affine curve, one can solve the following quadratic equation:

$$(\Re\{AA\}e + \Re\{BB\})^2 + (\Im\{AA\}e + \Im\{BB\})^2 = i_{\text{MaxLim}}^2$$

The above quadratic equation can be transformed into a quadratic equation of the form $Ax^2 + Bx + C = 0$ with

$$A = \Re\{AA\}^2 + \Im\{AA\}^2$$
$$B = 2(\Re\{AA\}\Re\{BB\} + \Im\{AA\}\Im\{BB\})$$
$$C = \Re\{BB\}^2 + \Im\{BB\}^2 - i_{\text{MaxLim}}^2$$

By taking the positive solution, the EMF magnitude can be found as:

$$e_{\text{Lim}} = \frac{-B + \sqrt{B^2 - 4AC}}{2A}$$

wherein the solution to the above equation gives the following limits for the positive and negative sequence vectors of the EMF vector:

$$\underline{e}^+_{\text{Lim}} = e_{\text{Lim}} \exp\left(i\delta_p\right)$$

$$\underline{e}^-_{\text{Lim}} = 0$$

However, the above limitation may sometimes not be sufficient to ensure that all of the phase currents of the converter are below the predetermined current limit. In such a case, it may be necessary to apply further limitation by using a reduction factor, which may be defined by dividing the predetermined current limit with a calculated maximum phase current, $i_{\text{Max,ph}}$, as follows:

$$k_{\text{red}} = \frac{i_{\text{MaxLim}}}{i_{\text{Max,ph}}},$$

or as

$$k_{\text{red}} = \begin{cases} 1 & i_{\text{Max,ph}} \le i_{\text{MaxLim}} \\ \dfrac{i_{\text{MaxLim}}}{i_{\text{Max,ph}}} & i_{\text{Max,ph}} > i_{\text{MaxLim}} \end{cases}$$

The maximum phase current may be extracted from the determined vector of reference currents for three phases, as follows:

$$i_{\text{Max,ph}} = \max\left(\left|\underline{i}_{\text{ABC}}\right|\right)$$

The above would lead to the following limitation of the positive and negative sequence vectors of the EMF vector:

$$\underline{e}^+_{\text{Lim}} = \underline{u}^+_g + k_{\text{red}}\underline{z}^+_V \underline{i}^+_{g,\text{Unlim}}$$

$$\underline{e}^-_{\text{Lim}} = \underline{u}^-_g + k_{\text{red}}\underline{z}^-_V \underline{i}^-_{g,\text{Unlim}}$$

Further, the current reference limiter discussed in the above may use the reduction factor to reduce the current reference.

The reference voltage may be determined by, at least, feeding the EMF vector through a, real or virtual, admittance or a, real or virtual, impedance or admittance. If a, real or virtual, impedance is used, a grid current measurement may further be used to determine the reference voltage. Thus, the reference voltage for the converter may be calculated based on the EMF vector output from the control system or method according to the present disclosure. The EMF vector, which may have been limited according to the present disclosure, may be input into a (virtual) admittance together with a voltage measured at the PCC to obtain a reference current. The reference current may be fed into a current controller in order to obtain the reference voltage. Alternatively, the EMF vector may be fed to a voltage controller, which may obtain the active and reactive powers measured at the PCC, wherein the voltage controller may be configured to determine the reference voltage. However, before feeding the EMF vector to the voltage controller, the present disclosure may include feeding the EMF vector through a virtual impedance, which may also have a current measured at the PCC as input signal, wherein the resulting output is fed to the voltage controller.

It is noted that other embodiments using all possible combinations of features recited in the above-described embodiments, alternatives or examples, may be envisaged. Thus, the present disclosure also relates to all possible combinations of features mentioned herein.

**BRIEF DESCRIPTION OF DRAWINGS**

Exemplifying embodiments will now be described in more detail, with reference to the following appended drawings.

Figs. 1 to 2 illustrate control systems according to exemplifying embodiments of the present disclosure.

Fig. 3 illustrates a flow chart according to an exemplifying embodiment of the present disclosure.

As illustrated in the figures, the sizes of elements and region may be exaggerated for illustrative purposes and, thus, are provided to illustrate the general structures of the embodiments. Like reference numerals refer to like elements throughout.

**DETAILED DESCRIPTION**

Exemplifying embodiments will now be described more fully hereinafter with reference to the accompanying drawings in which currently preferred embodiments are shown. The invention may, however, be embodied in many different forms and should not be construed as limited to the embodiments set forth herein; rather, these embodiments are provided for thoroughness and completeness, and fully convey the scope of the invention to the skilled person.

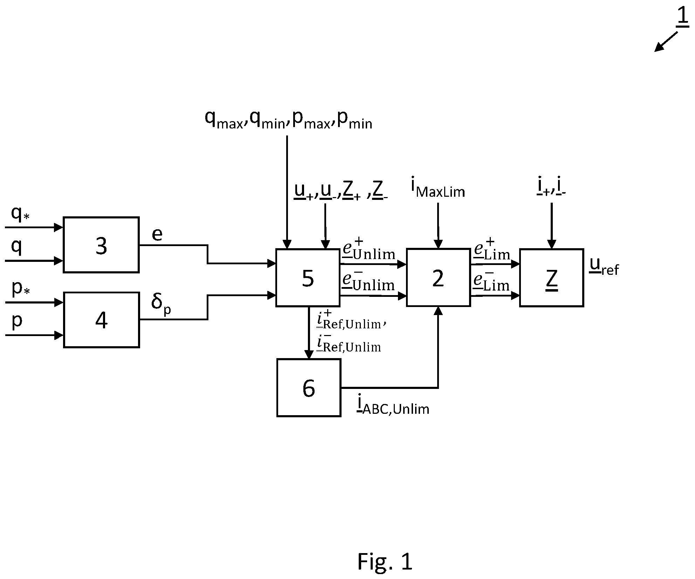

Fig. 1 illustrates a control system 1 according to an exemplifying embodiment of the present disclosure. The control system 1 is configured to calculate a reference voltage vector $u_{ref}$ for a converter (not shown). The converter may be connected to a power grid at a point-of-common-coupling (PCC). The control system 1 may be configured to provide grid forming capabilities, by controlling the converter. Grid forming provided by the control system 1 may be seen as controlling the converter to emulate a voltage source connected to the PCC via an impedance Z, which may virtual or real.

The control system 1 comprises an electromotive force, EMF-, limiter 2. The EMF-limiter may be configured to receive positive and negative sequence vectors $\underline{e}^+_{Unlim}$, $\underline{e}^-_{Unlim}$ which have been decomposed of an EMF vector.

The EMF-limiter 2 is configured to receive, and/or calculate, a predetermined current limit $i_{MaxLim}$. Further, the EMF-limiter 2 is configured to monitor a vector $i_{ABC,Unlim}$ of reference currents for three phases to check (continuously or intermittently) whether any of the phases, i.e., components of the vector, exceed the predetermined current limit $i_{MaxLim}$. If the predetermined current limit $i_{MaxLim}$ is exceeded, the EMF-limiter is configured to limit the positive and/or the negative sequence vectors of the EMF vector $\underline{e}^+_{Unlim}, \underline{e}^-_{Unlim}$.

The vector $i_{ABC,Unlim}$ of reference currents may be a transformation of a positive and negative sequence vectors $\underline{i}^+_{Ref,Unlim}, \underline{i}^-_{Ref,Unlim}$ of a reference current (not shown), which is shown in Fig. 1 as a transformation block 6. However, it is to be understood that the transformation may be performed by other components of the control system 1. For example, the EMF-limiter may be configured to receive, or calculate, the positive and negative sequence vectors $\underline{i}^+_{Ref,Unlim}, \underline{i}^-_{Ref,Unlim}$ of the reference current, and then perform the transformation.

The positive and negative sequence vectors $\underline{i}^+_{Ref,Unlim}, \underline{i}^-_{Ref,Unlim}$ of the reference current may be calculated based on at least the following inputs: the positive and negative sequence vectors $u_+$, $u_-$ of a PCC voltage vector (which is measured at the PCC), the EMF vector $\underline{e}^+_{Unlim}, \underline{e}^-_{Unlim}$, and the impedance $\underline{Z}_+$, $\underline{Z}_-$. In Fig.1, the positive and negative sequence vectors $\underline{i}^+_{Ref,Unlim}, \underline{i}^-_{Ref,Unlim}$ of the reference current is shown as being calculated by a component block 5 (discussed further in the below) having received the abovementioned inputs. However, it is to be understood that the present disclosure is not limited to such a calculation, and that the positive and negative sequence vectors $\underline{i}^+_{Ref,Unlim}, \underline{i}^-_{Ref,Unlim}$ of the reference current may be calculated by another component of the control system 1, such as the EMF-limiter 2, having received the abovementioned inputs.

Since the vector $i_{ABC,Unlim}$ of reference currents for three phases is a transformation of the positive and negative sequence vectors $\underline{i}^{+}_{Ref,Unlim}, \underline{i}^{-}_{Ref,Unlim}$ of the reference current, which is turn is determined based on the positive and the negative sequence vectors of the EMF vector $\underline{e}^{+}_{Unlim}, \underline{e}^{-}_{Unlim}$, a limitation of the positive and the negative sequence vectors of the EMF vector $\underline{e}^{+}_{Unlim}, \underline{e}^{-}_{Unlim}$ thereby causes the vector $i_{ABC,Unlim}$ of reference currents for three phases to be limited. This limitation by the EMF-limiter 2 is performed until all components of the vector $i_{ABC,Unlim}$ of reference currents for three phases is below the predetermined current limit $i_{MaxLim}$. The resulting output from the EMF-limiter 2, if the predetermined current limit $i_{MaxLim}$ is being exceeded, may be referenced to as the limited positive and negative sequence vectors of the EMF vector $\underline{e}^{+}_{Lim}, \underline{e}^{-}_{Lim}$.

The control system 1 may further comprise a reactive power controller (RPC) 3 configured to calculate the EMF magnitude e of the (unlimited) EMF vector based on received signals of a reactive power reference q* and a reactive power q measured at the PCC. The control system 1 may further comprise an active power controller (APC) 4 configured to calculate an EMF angle $\delta_p$ of the (unlimited) EMF vector based on received signals of an active power reference p* and an active power p measured at the PCC. Thereby, the RPC 3 and the APC 4 may be configured to calculate the components of the (unlimited) EMF vector for the rest of the control system 1. The RPC 3 and the APC 4 may further be configured to limit the EMF magnitude e and the EMF angle $\delta_p$ based on received maximum and minimum limits for the reactive power $q_{max}$, $q_{min}$, and the active power $p_{max}$, $p_{min}$. In Fig. 1, the EMF magnitude e and the EMF angle $\delta_p$ being output from the RPC 3 and the APC 4, respectively, are shown as being fed via another component 5 from which output is being fed to the EMF-limiter 2. The other component 5 may, for example, be understood as a general purpose calculation block of the control system 1. However, the component 5 may, alternatively or additionally, be understood as an active and reactive power limiter which may be configured to calculate the (unlimited) EMF vector and the reactive and/or the active power references p*, q*. The component 5 may further be configured to determine maximum and minimum limits for the EMF magnitude e and the EMF angle $\delta_p$. Further, the limits for the EMF magnitude e and the EMF angle $\delta_p$ may be determined based on reactive power $q_{max}$, $q_{min}$ limits, and active power limits $p_{max}$, $p_{min}$. In other words, the component 5, and/or the control system 1, may be configured to, continuously or intermittently, calculate limits of the EMF magnitude e and the EMF angle $\delta_p$, which may be based on physical limitations of the converter and/or electrical characteristics at the PCC and or the limits for reactive power $q_{max}$, $q_{min}$, and the active power $p_{max}$, $p_{min}$.

The active power limits $p_{max}$, pmin and reactive power limits $q_{max}$, $q_{min}$ may be received, by the component 5 and/or another component of the control system 1, or may be calculated, by the component 5 and/or another component of the control system 1, based on physical limitations of the converter and/or electrical characteristics at the PCC.

Further, the component 5 may be configured to calculate the positive and negative sequence vectors $\underline{i}^{+}_{Ref,Unlim}, \underline{i}^{-}_{Ref,Unlim}$ and to transmit them to the EMF-limiter 2. However, the present disclosure is not limited to the component 5 calculating the positive and negative sequence vectors $\underline{i}^{+}_{Ref,Unlim}, \underline{i}^{-}_{Ref,Unlim}$, and the calculation may be performed by another portion of the control system 1, such as, for example, the EMF-limiter 2.

Fig. 1 further shows the (potentially) limited positive and the negative sequence vectors of the EMF vector $\underline{e}^{+}_{Lim}, \underline{e}^{-}_{Lim}$ being output from the EMF-limiter 2 and fed through an impedance block Z. The impedance block Z may alternatively be understood as an admittance block. The impedance block Z may be configured to receive the positive and the negative sequence vectors of the EMF vector $\underline{e}^{+}_{Lim}, \underline{e}^{-}_{Lim}$ and the positive and negative sequence vectors of a PCC voltage vector, and to calculate the reference voltage vector $\underline{u}_{ref}$ for the converter based on the received vectors, i.e. inputs. The calculation of the reference voltage vector $\underline{u}_{ref}$ may further be based on positive and negative sequence vectors $\underline{i}_{+}, \underline{i}_{-}$ of a PCC current vector (not shown). The control system 1 may be configured to receive the PCC current vector and to then decompose the PCC current vector into respective positive and negative sequence vectors. In Fig. 1 the impedance block $\underline{Z}$ is shown as receiving the positive and negative sequence vectors $\underline{i}_{+}, \underline{i}_{-}$ of a PCC current vector, however, any component of the control system 1 may be configured to receive the PCC current vector and may be configured to decompose it, or it may be configured to receive the decomposed positive and negative sequence vectors $\underline{i}_{+}, \underline{i}_{-}$ of a PCC current vector. The impedance block $\underline{Z}$ may be configured to calculate a reference current vector (not shown) in order to then calculate the reference voltage vector $\underline{u}_{ref}$.

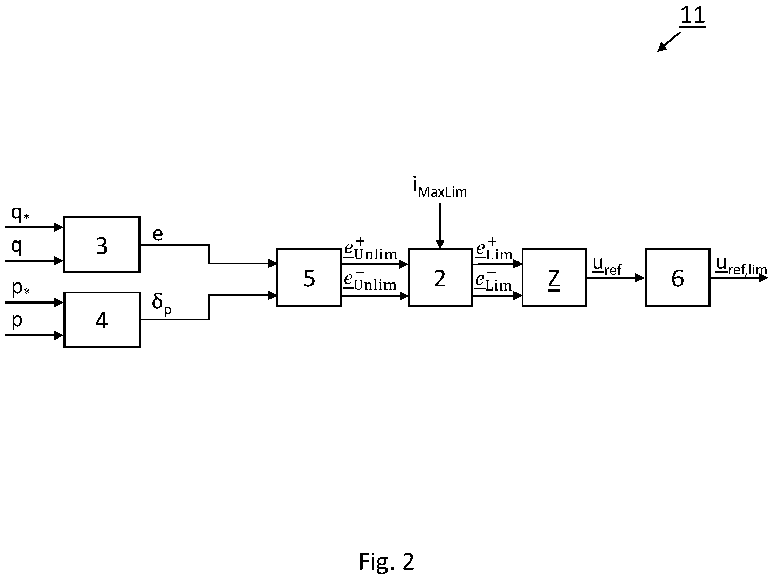

Fig. 2 illustrates a control system 11 according to an exemplifying embodiment of the present disclosure.

The exemplifying embodiments shown in Figs. 1 and 2 share a majority of their components. Therefore, reference is made to the text related to Fig. 1 in order to provide an increased understanding of the features which are shared by the exemplifying embodiments shown in Figs. 1 and 2.

A difference between the control system 11 shown in Fig. 2 and the control system 1 shown in Fig. 1 is that the control system 11 shown in Fig. 2 further comprises a limiter block 6.

The limiter block 6 may be configured to receive, or calculate, a maximum reference voltage limit, and may be configured to ensure that the reference voltage vector $\underline{u}_{ref}$ does not exceed the maximum reference voltage limit. In other words, the limiter block 6 may be configured to limit the reference voltage vector $\underline{u}_{ref}$ from exceeding the maximum reference voltage limit.

The limiter block 6 may be configured to limit the reference voltage vector $\underline{u}_{ref}$ output from the impedance block $\underline{Z}$.

Alternatively, the limiter block 6 may be configured to receive a reference current vector which has been calculated by the impedance block $\underline{Z}$, and may then limit the reference current vector. In such an alternative, the control system 11 may further comprise a current controller (not shown) configured to receive the (limited) reference current vector in order to calculate the (limited) reference voltage vector $\underline{u}_{ref}$. Thereby, the reference voltage vector $\underline{u}_{ref}$ would be limited by limiting the reference current vector.

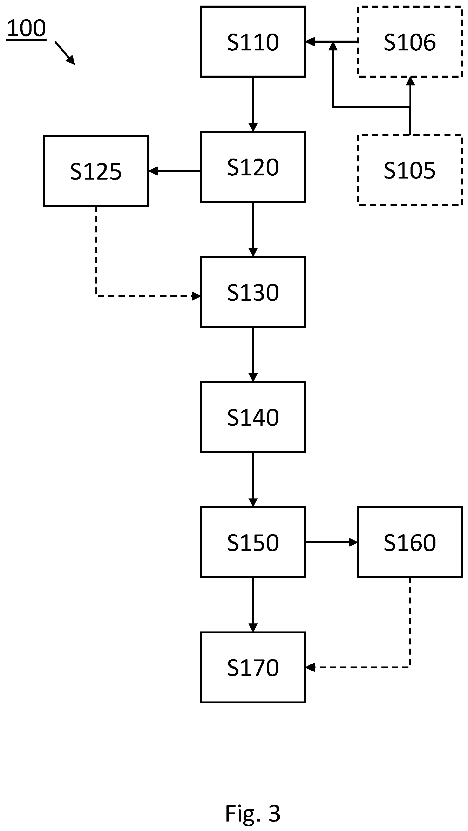

Fig. 3 illustrates a flow chart of a method 100 according to an exemplifying embodiment of the present disclosure.

The method 100 may include the step of receiving S110 a PCC voltage vector $\underline{u}_g$ which is measured at a PCC, and an electromagnetic force, EMF, vector $\underline{e}_{unlim}$ of the voltage source.

The method may comprise, prior to the step of receiving S110, the step of calculating S105 the electromagnetic force, EMF, vector $\underline{e}$ of a voltage source based on active and reactive power references $p^*$, $q^*$ and active and reactive power p, q, measured at the PCC wherein the method may further comprise calculating S106 the EMF magnitude e of the EMF vector $\underline{e}$ based on at least a reactive power reference $q^*$ and a reactive power q measured at the PCC, and the EMF angle $\delta_p$ of the EMF vector $\underline{e}$ based on at least an active power reference $p^*$ and an active power p measured at the PCC.

The method 100 may further comprise the steps of decomposing S120 the PCC voltage vector, the EMF vector, and a vector representative of the impedance into, corresponding, positive and negative sequence vectors $\underline{u}_+$, $\underline{u}_-$, $\underline{e}_{+,unlim}$, $\underline{e}_{-,unlim}$, Z+, $\underline{Z}_-$, and calculating S130 positive and negative sequence vectors $\underline{i}^+_{Ref,Unlim}$, $\underline{i}^-_{Ref,Unlim}$ of a reference current based on at least the positive and negative sequence vectors of the PCC voltage vector, the EMF vector, and the impedance. However, the method 100 may further comprise, while performing the steps of decomposing S120 and the calculating S130, limiting S125 the positive sequence EMF magnitude $e^+$ and the positive sequence EMF angle $\delta_p$ of the positive sequence EMF vector $\underline{e}^+$ as well as the negative sequence EMF magnitude $e^-$ and the negative sequence EMF angle of the negative sequence EMF vector $\underline{e}^-$ if the resulting power and/or the resulting reactive power falls outside of an active power range and a reactive power range, respectively.

The method 100 may further comprise the step of transforming S140 the positive and negative sequence vectors of the reference current into a three-phase reference frame to obtain a vector $\underline{i}_{ABC,Unlim}$ of reference currents for three phases.

The method 100 further comprises the steps of determining S150 if one or more phase currents of the phase currents vector exceed a predetermined current limit $i_{MaxLim}$, and if a determination S150 confirms that the predetermined current limit $i_{MaxLim}$ is exceeded, limiting S160 at least one of the positive and negative sequence vectors $\underline{e}_{+,lim}$, $\underline{e}_{-,lim}$, of the EMF vector such that the resulting one or more phase currents of the phase currents vector $\underline{i}_{ABC,Unlim}$ is reduced below said predetermined current limit, and calculating S170 a reference voltage $\underline{u}_{ref}$ based at least on the EMF vector output from the EMF-limiter.

The invention has mainly been described above with reference to a few embodiments. However, as is readily appreciated by a person skilled in the art, other embodiments than the ones disclosed above are equally possible within the scope of the invention, as defined by the appended patent claims. Further, although features and elements are described above in particular combinations, each feature or element can be used alone without the other features and elements or in various combinations with or without other features and elements.

Additionally, variations to the disclosed embodiments can be understood and effected by the skilled person in practicing the claimed invention, from a study of the drawings, the disclosure, and the appended claims. In the claims, the word "comprising" does not exclude other elements, and the indefinite article "a" or "an" does not exclude a plurality. The mere fact that certain features are recited in mutually different dependent claims does not indicate that a combination of these features cannot be used to advantage.

**Claims**

1. A control system (1) for controlling a converter connected at a point-of-common-coupling, PCC, to emulate a voltage source connected to the PCC via an impedance ($\underline{Z}$), wherein the system is configured to:

   receive a PCC voltage vector which is measured at the PCC, and an electromagnetic force, EMF, vector ($\underline{e}_{unlim}$) of the voltage source; and
   decompose the PCC voltage vector, the EMF vector, and a vector representative of the impedance into, corresponding, positive and negative sequence vectors (u+, $\underline{u}_-$, $\underline{e}_{Unlim}^+$, $\underline{e}_{Unlim}^-$, $\underline{Z}_+$, $\underline{Z}_-$);

   calculate positive and negative sequence vectors $\left(\underline{i}_{Ref,Unlim}^+, \underline{i}_{Ref,Unlim}^-\right)$ of a reference current based on at least the positive and negative sequence vectors of the PCC voltage vector, the EMF vector, and the impedance;
   transform the positive and negative sequence vectors of the reference current into a three-phase reference frame to obtain a vector ($i_{ABC,Unlim}$) of reference currents for three phases;
   wherein the system comprises an EMF-limiter (2) configured to, if one or more phase currents of the phase currents vector ($i_{ABC,Unlim}$) is determined to exceed a predetermined current limit ($i_{MaxLim}$), limit at least one of the positive and negative sequence vectors (e+,lim, e-,lim,) of the EMF vector such that the resulting one or more phase currents of the phase currents vector is reduced below said predetermined current limit; and
   wherein the system is configured to calculate a reference voltage vector ($\underline{u}_{ref}$) based at least on the EMF vector output from the EMF-limiter.

2. The control system according to claim 1, wherein the limiting of at least one of the EMF positive and negative sequence vectors (e+,unlim, e-,unlim,) is according to: or

$$\underline{e}_{Lim}^+ = e_{Lim}^+ \exp\left(j\delta_p\right), \qquad \underline{e}_{Lim}^- = e_{Lim}^- \exp\left(j\delta_n\right)$$

$$\underline{e}_{Lim}^+ = \underline{u}_+ + k\underline{Z}_+\underline{i}_{Ref,Unlim}^+, \qquad \underline{e}_{Lim}^- = \underline{u}_- + k\underline{Z}_-\underline{i}_{Ref,Unlim}^-$$

   wherein $e_{Lim}^+$ is the limited positive sequence EMF magnitude of the EMF vector $\left(\underline{e}_{Lim}^+\right)$, $\delta_p$ is the positive sequence EMF angle of the EMF vector $\left(\underline{e}_{Lim}^+\right)$, $e_{Lim}^-$ is the limited negative sequence EMF magnitude of the EMF vector $\left(\underline{e}_{Lim}^-\right)$, $\delta_n$ is the negative sequence EMF angle of the EMF vector $\left(\underline{e}_{Lim}^-\right)$, and k is a reduction factor equal to the predetermined current limit ($i_{MaxLim}$) divided by a maximum phase current ($i_{Max,ph}$).

3. The control system according to claim 1 or 2, wherein the system is configured to calculate the electromagnetic force, EMF, vector ($\underline{e}_{unlim}$) of the voltage source based on active and reactive power references (p*, q*) and active and reactive power measured at the PCC (p, q).

4. The control system according to claim 3, further comprising a power limiter configured for limiting the positive sequence EMF magnitude ($e^+$) and the positive sequence EMF angle ($\delta_p$) of the positive sequence EMF vector ($\underline{e}^+$) as well as the negative sequence EMF magnitude ($e^-$) and the negative sequence EMF angle ($\delta_n$) of the negative sequence EMF vector ($\underline{e}^-$) if the resulting power and/or the resulting reactive power falls outside of an active power range and a reactive power range, respectively.

5. The control system according to claim 4, wherein the active power range and the reactive power range are each defined by a minimum limit ($p_{min}$, $q_{min}$) and/or a maximum limit ($p_{max}$, $q_{max}$), respectively.

6. The control system according to any of the preceding claims, wherein the current positive and negative sequence vectors $\left(\underline{i}_{Ref,Unlim}^+, \underline{i}_{Ref,Unlim}^-\right)$ of the reference current are calculated according to the following equations:

$$\underline{i}^+_{Ref,Unlim} = \frac{\underline{e}_+ - \underline{u}_+}{\underline{Z}_+}$$

$$\underline{i}^-_{Ref,Unlim} = \frac{\underline{e}_- - \underline{u}_-}{\underline{Z}_-}$$

7. The control system according to any of claims 3 to 6, further comprising

   a reactive power controller, RPC, (3) configured to calculate the EMF magnitude (e) of the EMF vector (e) based on at least a reactive power reference (q*) and a reactive power (q) measured at the PCC; and
   an active power controller, APC, (4) configured to calculate the EMF angle ($\delta_p$) of the EMF vector (e) based on at least an active power reference (p*) and an active power (p) measured at the PCC.

8. The control system according to any of the preceding claims, wherein the reference voltage vector ($\underline{u}_{ref}$) is determined by at least:
   feeding the positive and negative sequence vectors ($\underline{e}_{+,lim}$, $\underline{e}_{-,lim}$,) of the EMF vector output from the EMF-limiter (2) through the impedance ($\underline{Z}$) or through a virtual admittance in order to obtain the calculated reference voltage vector ($\underline{u}_{ref}$).

9. A method (100) for controlling a converter connected at a point-of-common-coupling, PCC, to emulate a voltage source connected to the PCC via an impedance ($\underline{Z}$), the method comprising the steps of:

   receiving (S110) a PCC voltage vector which is measured at the PCC, and an electromagnetic force, EMF, vector ($\underline{e}_{unlim}$) of the voltage source; and
   decomposing (S120) the PCC voltage vector, the EMF vector, and a vector representative of the impedance into, corresponding, positive and negative sequence vectors ($\underline{u}_+$, $\underline{u}_-$, $\underline{e}_{+,unlim}$, $\underline{e}_{-,unlim}$, $\underline{Z}+$, $\underline{Z}-$);
   calculating (S130) positive and negative sequence vectors $\left(\underline{i}^+_{Ref,Unlim}, \underline{i}^-_{Ref,Unlim}\right)$ of a reference current based on at least the positive and negative sequence vectors of the PCC voltage vector, the EMF vector, and the impedance;
   transforming (S140) the positive and negative sequence vectors of the reference current into a three-phase reference frame to obtain a vector ($\underline{i}_{ABC,Unlim}$) of reference currents for three phases;
   determining (S150) if one or more phase currents of the phase currents vector exceed a predetermined current limit ($i_{MaxLim}$), and if so, limit (S160) at least one of the positive and negative sequence vectors ($\underline{e}_{+,lim}$, $\underline{e}_{-,lim}$,) of the EMF vector such that the resulting one or more phase currents of the phase currents vector ($\underline{i}_{ABC,Unlim}$) is reduced below said predetermined current limit; and
   calculating (S170) a reference voltage ($\underline{u}_{ref}$) based at least on the EMF vector output from the EMF-limiter.

10. The method according to claim 9, wherein the step of limiting (S160) at least one of the EMF positive and negative sequence vectors ($\underline{e}_{+,unlim}$, $\underline{e}_{-,unlim}$,) is performed according to: or

$$\underline{e}^+_{Lim} = e^+_{Lim}\exp(j\delta_p), \qquad \underline{e}^-_{Lim} = e^-_{Lim}\exp(j\delta_n)$$

$$\underline{e}^+_{Lim} = \underline{u}_+ + k\underline{Z}_+\underline{i}^-_{Ref,Unlim}, \qquad \underline{e}^-_{Lim} = \underline{u}_- + k\underline{Z}_-\underline{i}^-_{Ref,Unlim}$$

wherein $e^+_{Lim}$ is the limited positive sequence EMF magnitude of the EMF vector $\left(\underline{e}^+_{Lim}\right)$, $\delta_p$ is the positive sequence EMF angle of the EMF vector $\left(\underline{e}^+_{Lim}\right)$, $e^-_{Lim}$ is the limited negative sequence EMF magnitude of the EMF vector $\left(\underline{e}^-_{Lim}\right)$, $\delta_n$ is the negative sequence EMF angle of the EMF vector $\left(\underline{e}^-_{Lim}\right)$, and k is a reduction factor equal to the predetermined current limit ($i_{MaxLim}$) divided by a maximum phase current ($i_{Max,ph}$).

**11.** The method according to claim 9 or 10, further comprising the step of:
calculating (S105) the electromagnetic force, EMF, vector ($\underline{e}$) of the voltage source based on active and reactive power references ($p^*$, $q^*$) and active and reactive power measured at the PCC (p, q).

**12.** The method according to claim 11, further comprising the step of:
limiting (S125) the positive sequence EMF magnitude ($e^+$) and the positive sequence EMF angle ($\delta_p$) of the positive sequence EMF vector ($\underline{e}^+$) as well as the negative sequence EMF magnitude ($e^-$) and the negative sequence EMF angle ($\delta_n$) of the negative sequence EMF vector ($\underline{e}^-$) if the resulting power and/or the resulting reactive power falls outside of an active power range and a reactive power range, respectively.

**13.** The method according to any of claims 9 to 12, the active power range and the reactive power range are each defined by a minimum limit ($p_{min}$, $q_{min}$) and/or a maximum limit ($p_{max}$, $q_{max}$), respectively.

**14.** The method according to any of claims 9 to 13, wherein the positive and negative sequence vectors $\left(\underline{i}^+_{Ref,Unlim}, \underline{i}^-_{Ref,Unlim}\right)$ of the reference current are calculated according to the following equations:

$$\underline{i}^+_{Ref,Unlim} = \frac{\underline{e}_+ - \underline{u}_+}{\underline{Z}_+}$$

$$\underline{i}^-_{Ref,Unlim} = \frac{\underline{e}_- - \underline{u}_-}{\underline{Z}_-}$$

**15.** The method according to any of claims 9 to 14, further comprising the steps of:

calculating (S106) the EMF magnitude (e) of the EMF vector ($\underline{e}$) based on at least a reactive power reference ($q^*$) and a reactive power (q) measured at the PCC; and
calculating (S106) the EMF angle ($\delta_p$) of the EMF vector ($\underline{e}$) based on at least an active power reference ($p^*$) and an active power (p) measured at the PCC.

EP 4 350 928 A1

Fig. 1

EP 4 350 928 A1

Fig. 2

Fig. 3

Europäisches
Patentamt

European
Patent Office

Office européen
des brevets

## EUROPEAN SEARCH REPORT

**Application Number**

EP 22 20 0358

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ACHARYA SAMRAT ET AL: "A Control Strategy for Voltage Unbalance Mitigation in an Islanded Microgrid Considering Demand Side Management Capability", IEEE TRANSACTIONS ON SMART GRID, IEEE, USA, vol. 10, no. 3, 1 May 2019 (2019-05-01), pages 2558-2568, XP011720806, ISSN: 1949-3053, DOI: 10.1109/TSG.2018.2804954 [retrieved on 2019-04-19] | 1-3,7, 9-11,15 | INV. H02J3/38 H02M7/5387 |
| Y | * figures 3,5 * | 6,14 | |
| A | | 4,5,12, 13 | |
| | ----- | | |
| X | JAYANTI N G ET AL: "Sequence analysis based DSP controller for Dynamic Voltage Restorer (DVR)", POWER ELECTRONICS SPECIALISTS CONFERENCE, 2008. PESC 2008. IEEE, IEEE, PISCATAWAY, NJ, USA, 15 June 2008 (2008-06-15), pages 3986-3991, XP031300580, ISBN: 978-1-4244-1667-7 | 1,9 | |
| | | | TECHNICAL FIELDS SEARCHED (IPC) |
| | | | H02J H02M |
| Y | * figure 4 * | 6,14 | |
| | ----- | | |
| X | LI ZILIN ET AL: "An Adaptive Fault Ride-Through Scheme for Grid-Forming Inverters Under Asymmetrical Grid Faults", IEEE TRANSACTIONS ON INDUSTRIAL ELECTRONICS, IEEE SERVICE CENTER, PISCATAWAY, NJ, USA, vol. 69, no. 12, 20 December 2021 (2021-12-20), pages 12912-12923, XP011913993, ISSN: 0278-0046, DOI: 10.1109/TIE.2021.3135641 [retrieved on 2021-12-21] * figure 3 * | 1,9 | |
| | ----- | | |

The present search report has been drawn up for all claims

| Place of search | Date of completion of the search | Examiner |
|---|---|---|
| Munich | 15 March 2023 | Bergler, Christian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)